# EUROPÄISCHE PATENTSCHRIFT

(11) **EP 1 616 713 B1**
(45) Veröffentlichungstag und Bekanntmachung des Hinweises auf die Patenterteilung: **14.11.2007**
(21) Anmeldenummer: 05105539.0
(22) Anmeldetag: 22.06.2005
(51) Int. Cl.: B41N 3/03

(54) **Wiederverwendbare Druckform**
Reusable printing plate
Plaque d'impression réutilisable

(30) Priorität: 16.07.2004 DE 102004034581
(43) Veröffentlichungstag der Anmeldung: 18.01.2006
(73) Patentinhaber: Heidelberger Druckmaschinen Aktiengesellschaft, 69115 Heidelberg (DE)
(72) Erfinder: Eck, Wolfgang, Bar Harbour; ME 04609 (US); Gutfleisch, Dr. Martin, 69221 Dossenheim (DE); Peiter, Dr. Gerhard Daniel, 68519 Viernheim (DE); Schlörholz, Dr. Matthias, 69124 Heidelberg (DE)

(56) Entgegenhaltungen:
- EP-A- 1 084 863
- EP-A- 1 247 644
- DE-A- 10 227 054
- GB-A- 1 122 404
- US-A1- 2003 228 469

## Beschreibung

Die Erfindung betrifft eine wiederverwendbare Druckform, insbesondere für den Einsatz sowohl im Nassoffset-Druck als auch im Trockenoffset-Druck, mit einer Druckfläche.

Die Erfindung betrifft weiterhin ein Verfahren zur Bebilderung einer wiederverwendbaren Druckform.

Druckformen werden in Druckwerken von Druckmaschinen eingesetzt, um ein vorgegebenes Druckmuster, ein vorgegebenes Sujet oder Bild, auf einen Bedruckstoff aufzubringen. Typische Bedruckstoffe sind Papier, Pappe, Karton, organische Polymere, Textilien oder dergleichen.

Im überwiegenden Maße kommen dabei Druckformen zum Einsatz, auf deren Druckfläche, ein Teil der Oberfläche der Druckform, dauerhaft das zu druckende Muster aufgebracht, strukturiert oder beschrieben ist. Derartige Druckformen können nur einfach genutzt werden. Aus verschiedenen Gründen ist es wünschenswert, Druckformen einzusetzen, welche mehrfach verwendet, insbesondere mehrfach beschrieben oder mehrfach bebildert werden können. Anders ausgedrückt, von besonderem Interesse sind Druckflächen, welche nach einer Strukturierung in ein erstes Bild gelöscht und später in ein zweites Bild strukturiert werden können. Im Zusammenhang dieser Darstellung sei unter einer wiederverwendbaren Druckform eine Druckform mit einer Druckfläche verstanden, welche mehrfach in verschiedene Bilder strukturiert werden kann.

Beim konventionellen Offset-Druck liegt eine Strukturierung der Druckfläche in Bereiche unterschiedlicher Benetzungseigenschaften, insbesondere hydrophile/lipophobe und hydrophobe/lipophile Bereiche, vor.

Der Nassoffset-Druck (auch: konventioneller Offset-Druck) basiert auf der Ausnutzung der Nichtrnischbarkeit von lipophilen Substanzen, insbesondere von öligen Fluiden oder Flüssigkeiten, und hydrophilen Substanzen, insbesondere von wässrigen Fluiden oder Flüssigkeiten, auf der Druckform, wobei die lipophile Substanz oder die Tinte oder Druckfarbe durch die bildaufbauenden Bereiche und die hydrophile Substanz oder Wasser durch die nicht bildaufbauenden Bereiche der Druckfläche festgehalten werden.

Wenn die in geeigneter Weise vorbereitete Druckfläche mit hydrophiler und lipophiler Substanz benetzt wird, so halten die nichtbildmäßigen Bereiche vorzugsweise die hydrophile Substanz zurück und stoßen die lipophile Substanz ab, während die bildmäßigen Bereiche die lipophile Substanz annehmen und die hydrophile Substanz abweisen. In der Folge wird dann die lipophile Substanz in geeigneter Weise auf die Oberfläche eines Materials übertragen, auf dem das Bild fixiert werden soll.

Der Trockenoffset-Druck (auch: wasserloser Offset-Druck) basiert auf einer Strukturierung der Druckfläche in Bereiche unterschiedlicher Benetzungseigenschaften. Eine zunächst ganzflächig farbabweisende, also lipophobe Oberfläche der Druckfläche wird im Zuge der Strukturierung bildmäßig farbannehmend, also lipophil geschaltet, so dass bei Aufbringung von Druckfarbe auf die Oberfläche die Druckfarbe nur an den bebilderten, farbannehmenden Bereichen der Oberfläche anhaftet und von dort auf den Bedruckstoff direkt oder indirekt übertragen wird.

In der EP 1 084 863 A1 wird im Zuge einer Bebilderung die Oberfläche eines Substrates, welches Titanoxid aufweist, mittels UV-Strahlung großflächig gelöscht und mittels IR-Strahlung strukturiert.

In der DE 102 27 054 A1 ist eine wiederverwendbare Druckform, z. B für den Einsatz im Nassoffset-Druck, beschrieben, welche eine mit wenigstens einer amphiphilen organischen Verbindung behandelte Druckfläche in Form einer Metalloxidoberfläche aufweist, wobei der polare Bereich der amphiphilen organischen Verbindung einen säureartigen Charakter hat.

In der US 6,321,652 B 1 wird im Zuge einer Bebilderung auf einem Substrat eine Molekülschicht aus sich selbst anordnenden Molekülen aufgebracht, deren Endgruppen in ihren hydrophoben Eigenschaften geändert werden können.

Die EP 1 247 644 A2 beschreibt einen Träger einer lithografischen Druckplatte, welcher zum Zwecke der Hydrophilierung mit einer fluorierten Phosphonsäure behandelt wird. Nach einer derartigen Behandlung wird die nunmehr hydrophilierte Oberfläche mit einer sogenannten Aufzeichnungsschicht versehen.

Die US 2003/0228469 A1 beschreibt fluorinierte Phosphonsäuren ohne jedoch dem Fachmann einen Hinweis auf die Verwendung bei der Herstellung von Druckplatten zu gehen. Die GB 1,122,404 beschreibt ebenfalls Phosphonsäuren. Wiederum erhält der Fachmann jedoch aus dem Dokument keinen Hinweis auf die Verwendung bei der Herstellung von Druckplatten.

Die Prozesszeit für die Präparation, d. h. der Vorbereitung einer wiederverwendbaren Druckform für einen folgenden Bebilderungsvorgang, ist bei Präparation der Druckform in der Druckmaschine eine kritische Größe, da während dieser Zeit ein Fortdrucken zumindest mit dem am Präparationsvorgang beteiligten Druckwerk nicht möglich ist. Es ist somit ein Bestreben, die Prozesszeit für die Präparation gegenüber dem Stand der Technik zu verkürzen.

Weiterhin besteht Nachfrage nach Druckformen, die sowohl im Nassoffset-Druck als auch im Trockenoffset-Druck verwendet oder eingesetzt werden können.

Es besteht überdies Nachfrage nach Druckformen, welche eine erhöhte Verträglichkeit gegenüber Defektstellen auf mit amphiphilen Molekülen belegten Druckflächen aufweisen.

Aufgabe der vorliegenden Erfindung ist es, eine wiederverwendbare Druckform zu schaffen, deren Druckfläche ein mehrfaches Erzeugen und Löschen von Bildern gestattet und deren Prozesszeit für die Präparation eine geringe Dauer aufweist.

Es ist eine weitere oder alternative Aufgabe der Erfindung, eine wiederverwendbare Druckform zu schaffen, die sowohl im Nassoffset-Druck als auch im Trockenoffset-Druck verwendet oder eingesetzt werden kann.

Es ist eine weitere oder alternative Aufgabe der Erfindung, eine wiederverwendbare Druckform zu schaffen, welche eine erhöhte Verträglichkeit gegenüber Defektstellen auf mit amphiphilen Molekülen belegten Druckflächen aufweist.

Eine weitere oder alternative Aufgabe der Erfindung ist es, ein Verfahren zur Bebilderung einer wiederverwendbaren Druckform zu schaffen, welches es erlaubt, mit einer Prozesszeit für die Präparation von geringer Dauer auf der Druckform mehrfach Bilder zu erzeugen und zu löschen.

Es ist eine weitere oder alternative Aufgabe der Erfindung, ein Verfahren zur Bebilderung einer wiederverwendbaren Druckform zu schaffen, wobei die nach dem Verfahren bebilderte Druckform sowohl im Nassoffset-Druck als auch im Trockenoffset-Druck verwendbar oder einsetzbar ist.

Eine weitere oder alternative Aufgabe der Erfindung ist es, ein Verfahren zur Herstellung einer fluorierten Phosphonsäure zu schaffen, mit welcher insbesondere eine wiederverwendbare Druckform behandelt werden kann.

Diese Aufgaben werden erfindungsgemäß durch eine wiederverwendbare Druckform mit den Merkmalen gemäß Anspruch 1, ein Verfahren zur Bebilderung einer wiederverwendbaren Druckform mit den Merkmalen gemäß Anspruch 9 und ein Verfahren zur Herstellung einer fluorierten Phosphonsäure mit den Merkmalen gemäß Anspruch 16 gelöst.

Vorteilhafte Weiterbildungen der Erfindung sind in den abhängigen Ansprüchen charakterisiert.

Eine erfindungsgemäße wiederverwendbare Druckform, insbesondere für den Einsatz sowohl im Nassoffset-Druck als auch im Trockenoffset-Druck, mit einer Druckfläche, zeichnet sich dadurch aus, dass die Druckfläche eine mit wenigstens einer fluorierten Phosphonsäure behandelte Metalloxidoberfläche aufweist, und dass die fluorierte Phosphonsäure eine fluorierte Alkylphosphonsäure, eine semi-perfluorierte Alkylphosphonsäure oder eine teil-aromatische Phosphonsäure ist.

Die erfindungsgemäße wiederverwendbare Druckform ist mit besonderem Vorteil in einem Offset-Dmckverfahren, insbesondere in direktem oder in indirektem Flachdruck, einsetzbar. Sie kann daher auch insbesondere als wiederbeschreibbare Offset-Druckform oder als (im Nanobereich) wiederbeschichtbare Offset-Druckform bezeichnet werden.

Die erfindungsgemäße wiederverwendbare Druckform ist weiterhin mit besonderem Vorteil sowohl im Nassoffset-Druck als auch im Troekenoffset-Druck einsetzbar.

Die behandelte Druckfläche wird durch die fluorierte Phosphonsäure hydrophobiert und lipophil für konventionelle Offsetfarbe bei Einsatz im Nassoffset-Druck bzw. wird lipophob für Trockenoffset-Druckfarbe bei Einsatz im Trockenoffset-Druck.

Der Begriff "teilaromatisch" soll in dieser Anmeldung so verstanden werden, dass ein Abschnitt des betreffenden Moleküls, insbesondere einer Kohlenstoffkette, (oder auch mehrere Abschnitte des betreffenden Moleküls) aromatischen Charakter besitzt.

Gemäß einer weiteren bevorzugten Ausführungsform ist die fluorierte Phosphonsäure eine semi-perfluorierte Stearinphosphonsäure.

Gemäß einer weiteren bevorzugten Ausführungsform weist die fluorierte Phosphonsäure eine Kohlenstoffkette, insbesondere eine einfach oder mehrfach verzweigte Kohlenstoffkette, auf, wobei die Anzahl der Kohlenstoffatome größer oder gleich 8 und kleiner oder gleich 30 ist.

Gemäß einer weiteren bevorzugten Ausführungsform kann die Metalloxidoberfläche eine nativ oxidierte Titanoberfläche, nativ oxidierte Edelstahloberfläche, beispielsweise Hastelloy, nativ oxidierte Aluminiumoberfläche, Titanat (TiO₂) oder Zirkonat (ZrO₂) sein.

Der Erfindung liegt damit unter anderem der Gedanke zugrunde, technisch raue oder glatte Metalloxidoberflächen mit fluorierter Phosphonsäure zu behandeln, insbesondere fluorierte Phosphonsäure auf technisch rauen oder glatten Metalloxidoberflächen aufzubringen oder technisch rauen oder glatten Metalloxidoberflächen mit fluorierter Phosphonsäure zu beschichten (dabei meint "technisch rau", dass der RMS-Wert ≥ 80 nm ist und "technisch glatt", dass der RMS-Wert < 80 nm ist, wobei der RMS-Wert den root mean square-Wert der Rauheit angibt).

Die wiederverwendbare Druckform kann damit auch insbesondere als (im Nanobereich) wiederbeschichtbare Druckform bezeichnet werden.

Mit Hilfe von fluorierter Phosphonsäure ist es möglich, reproduzierbar definiert hydrophobe (für den Nassoffset-Druck) bzw. lipophobe Metalloxidoberflächen (für den Trockenoffset-Druck), insbesondere Titanoxidoberflächen, herzustellen.

Die Metalloxidoberfläche wird in einen hydrophoben, farbführenden Zustand gebracht, welcher als Ausgangszustand für eine Bebilderung für ein Nassoffset-Druckverfahren dienen kann. Die Kontaktwinkel, gemessen gegen Wasser, dieser hydrophoben Metalloxidoberflächen sind Werte aus der Zahlenmenge des Intervalls reeller Zahlen zwischen 80 und 120 Grad. Die Metalloxidoberfläche kann dann durch kontrollierte Energiezufuhr in einen hydrophilen, farbführenden Zustand gebracht werden. Die Kontaktwinkel, gemessen gegen Wasser, im hydrophilen Zustand sind Werte aus der Zahlenmenge des Intervalls reeller Zahlen zwischen 0 und 10 Grad.

Der Hub zwischen den beiden Zuständen ist damit hinreichend groß für den Nassoffset-Druck (bei technisch rauen oder glatten Oberflächen). Die erfindungsgemäße Druckform ist somit schaltbar, insbesondere zwischen einem hydrophilen und einem hydrophoben Zustand. Nach einer Strukturierung der erfindungsgemäßen wiederbeschreibbaren Druckform in Bereiche im hydrophilen und Bereich im hydrophoben Zustand kann ein Nassoffset-Druckverfahren durchgeführt werden.

Ebenso kann die erfindungsgemäße Druckform bei Einsatz im Trockenoffset-Druck geschaltet werden, insbesondere zwischen einem lipophoben und lipophilen Zustand bezüglich einer Trockenoffset-Druckfarbe (bei technisch glatten Oberflächen).

Die erfindungsgemäße wiederverwendbare Druckform kann in verschiedenen Ausführungsformen mit unterschiedlichen topologischen und geometrischen Eigenschaften ausgeführt sein. Die erfindungsgemäße Druckform kann als Oberfläche eines Vollzylinders oder als Oberfläche eines Hohlzylinders realisiert sein. Der Zylinder, voll oder hohl, kann insbesondere ein gerader Kreiszylinder sein. Unter Oberfläche ist insbesondere die laterale Oberfläche zu verstehen.

Alternativ dazu kann die erfindungsgemäße Druckform auch als eine Hülse, eine Platte oder als eine Folie ausgebildet sein. Eine Hülse weist zwei Oberflächen (Innenfläche und Außenfläche) auf und hat zwei Ränder. Die Hülse kann zylinderförmig mit gleichmäßigem Durchmesser, insbesondere Innendurchmesser oder Außendurchmesser, (kreishohlzylinderförmig) oder konisch, das heißt mit variablen, insbesondere gleichförmig zu- oder abnehmendem Durchmesser, insbesondere Innendurchmesser oder Außendurchmesser, sein. Innendurchmesser und Außendurchmesser können unterschiedlich variieren. Sie ist damit im topologischen Sinn ein nichteinfach zusammenhängendes Objekt. Eine Platte weist zwei Oberflächen (Oberseite und Unterseite) auf und hat einen Rand. Sie ist damit im topologischen Sinn ein einfach zusammenhängendes Objekt. Die Platte kann insbesondere quaderförmig oder rechteckig sein. Die Folie kann in aufgespultem Zustand im Innern eines Zylinders bevorratet vorliegen und auf die Oberfläche eines Zylinder in Umfangsrichtung aufgezogen bzw. weitergespult werden.

Die erfindungsgemäße wiederverwendbare Druckform kann in einen Druckwerk, insbesondere in einem Offset-Druckwerk, zum Einsatz kommen. Sie kann die Oberfläche eines Druckzylinders bilden oder auf der Oberfläche eines Zylinders aufgenommen sein.

Ein erfindungsgemäßes Druckwerk zeichnet sich daher durch wenigstens eine erfindungsgemäße wiederverwendbare Druckform aus. Das erfindungsgemäße Druckwerk kann Teil einer Druckmaschine, insbesondere einer Offset-Druckmaschine, sein. Die Druckmaschine kann eine bogenverarbeitende oder eine bahnverarbeitende Druckmaschine sein. Eine bogenverarbeitende Druckmaschine kann einen Anleger, eine Anzahl von Druckwerken und einen Ausleger aufweisen. Eine erfindungsgemäße Druckmaschine weist wenigstens ein erfindungsgemäßes Druckwerk auf.

Im Zusammenhang mit der erfindungsgemäßen wiederverwendbaren Druckform steht auch ein erfindungsgemäßes Verfahren zur Bebilderung einer wiederverwendbaren, insbesondere wiederbeschreibbaren oder wiederbebilderbaren, Druckform mit diversen vorteilhaften Weiterbildungen.

Dem erfindungsgemäßen Verfahren liegt das Bestreben zugrunde, einen Kreisprozess zu schaffen, in welchem eine erfindungsgemäße Druckform mehrfach bebildert und gelöscht werden kann, so dass sich die Druckform insbesondere für den Offset-Druck eignet. Das erfindungsgemäße Verfahren zur Bebilderung kann sowohl innerhalb als auch außerhalb eines Druckwerks oder einer Druckmaschine durchgeführt werden. Die Druckfläche kann bildmäßig durch Belichtung durch eine maskenartige Vorlage verarbeitet werden. Bevorzugt ist aber die punktweise direkte Belichtung mit digitaler Information.

Ein erfindungsgemäßes Verfahren zur Bebilderung einer wiederverwendbaren Druckform, zeichnet sich aus durch:
- Präparieren einer wiederverwendbaren Druckform, mit einer Druckfläche wie oben mit Bezug zu einer erfindungsgemäßen Druckform beschrieben, wobei das Präparieren das Benetzen der Druckfläche (32, 42) mit einer Lösung, welche eine fluorierte Alkylphosphonsäure, eine semi-perfluorierte Alkylphosphonsäure oder eine teil-aromatische Phosphonsäure enthält, umfasst;
- Erzeugen eines Bildes auf der Druckform durch selektive punktweise Energiezufuhr; und
- Löschen des Bildes nach einem Bedrucken eines Bedruckstoffes, insbesondere in einem Offset-Druckverfahren, durch großflächige Energiezufuhr.

Die wiederbeschreibbare Druckform kann so ausgeführt sein, wie es oben in dieser Darstellung näher beschrieben ist.

Ein Bild wird durch selektive, insbesondere räumlich und zeitlich selektive, punktweise Energiezufuhr auf der Druckfläche erzeugt. Anders ausgedrückt, es wird eine digitale Bebilderung ausgeführt. Durch die Bebilderung wird die Druckform von einem hydrophoben in einen hydrophilen Zustand (im Nassoffset-Druck) oder von einem lipophoben in einen lipophilen Zustand (im Trockenoffset-Druck) überführt.

Gemäß einer bevorzugten Ausführungsform zeichnet sich das Verfahren weiterhin dadurch aus, dass das Präparieren der wiederverwendbaren Druckform das Benetzen der Druckfläche mit einer Lösung, welche wenigstens eine semi-perfluorierte Stearinphosphonsäure enthält, umfasst.

Das Verfahren kann iteriert oder wiederholt werden. Die Schritte des Präparierens, Bebilderns und Löschens können somit mehrfach mit verschiedenen Druckmustern oder Sujets durchgeführt werden. Das erfindungsgemäße Verfahren ermöglicht somit einen Kreisprozess.

Die Druckfläche kann mit einer wässrigen Lösung oder mit einer alkoholischen Lösung, insbesondere Ethanol, benetzt werden, welche wenigstens eine fluorierte Phosphonsäure in geeigneter Konzentration, bevorzugt in der Konzentration 1 mMol/l, enthält. Dieses Belegen oder Terminierten kann in vorteilhafter Weiterbildung in einem Ultraschallbad erfolgen. Das Aufbringen, Terminieren oder Belegen der Metalloxidoberfläche, insbesondere Titandioxidoberfläche, mit den Molekülen der fluorierten Phosphonsäure erfolgt bereits in wenigen Sekunden, wenn die Metalloxidoberfläche der Lösung ausgesetzt, beispielsweise in die Lösung eingetaucht wird, um eine makroskopisch feststellbare Änderung der Benetzungseigenschaft hervorzurufen.

Gemäß einer bevorzugten Ausführungsform zeichnet sich das Verfahren weiterhin dadurch aus, dass das Verfahren ferner die folgenden Schritte umfasst:
- Reinigen der Druckfläche von Farbe (z. B. unter Einsatz von Eurostar, IPA oder Ethanol) und Aktivieren und/oder Initialisieren durch Bestrahlung der Metalloxidoberfläche mit einer UV-Lichtquelle;
- Entfernen nicht anhaftender Verbindungen von der behandelten Metalloxidoberfläche; und
- Trocknen der Metalloxidoberfläche mit einem wasserfreien Prozessgas, insbesondere mit Stickstoff.

Weiterhin kann folgender Verfahrensschritt nach dem Verfahrensschritt des Reinigens durchgeführt werden:
- Belegen der Oberfläche der Druckfläche mit fluorierten Phosphonsäure-Molekülen aus ethanolischer oder wässriger Lösung.

Das Entfernen nicht anhaftender Verbindungen kann insbesondere mit einer alkoholischen Lösung, bevorzugt mit Ethanol, erfolgen.

Gemäß einer bevorzugten Ausführungsform zeichnet sich das Verfahren weiterhin dadurch aus, dass das Präparieren der wiederverwendbaren Druckform die folgenden Schritte zur Präparation einer nativ oxidierten Titanoberfläche umfasst:
- Ätzen der nativ oxidierten Titanoberfläche; und
- Erzeugen eines definierten Oxidfilms, insbesondere einer hydrophilen Oberfläche oder einer lipophilen Oberfläche für Trockenoffset-Druckfarbe.

Eine Vor-Reinigung kann den Schritt des Abspülens mit Aceton, Ethanol, Isopropanol, Ethylacetat oder einem anderen geeigneten organischen Lösungsmittel umfassen. Ein Zweck ist insbesondere die Entfettung der Oberfläche.

Die Metalloxidoberfläche kann dann einer wässrigen Lösung der Zusammensetzung ein Volumenanteil 25%ige NH₄OH Lösung und ein Volumenanteil 30%ige H₂O₂ Lösung in vier Volumenanteilen H₂O bei einer Temperatur von etwa 60°C etwa für die Dauer von 10 Minuten ausgesetzt werden. Dieser Schritt ist insbesondere vorteilhaft für eine nativ oxidierte Titanoberfläche. Ein Zweck ist insbesondere eine Oxidation von sich auf der Metalloxidoberfläche befindlichen Kohlenwasserstoffe.

Eine Hauptreinigung kann durch ein Ätzen der Metalloxidoberfläche erfolgen. Das Ätzen kann durch eine Lösung der Zusammensetzung ein Volumenanteil 40%ige HF Lösung und drei Volumenanteile 30%ige H₂O₂ in zwanzig Volumenanteilen H₂O bei Zimmertemperatur für die Dauer von etwa 1 Minute durchgeführt werden. Ein Zweck ist insbesondere das Abtragen einiger einzelner Metalloxidlagen und das Einstellen einer definierten Rauheit (eines definierten RMS-Wertes bzw. root mean square-Wertes) der Metalloxidoberfläche.

Gemäß einer bevorzugten Ausführungsform zeichnet sich das Verfahren weiterhin dadurch aus, dass die Erzeugung eines Bildes auf der Druckfläche durch selektive punktweise Energiezufuhr mit Hilfe von elektromagnetischer Strahlung, insbesondere im infraroten Spektralbereich erfolgt, und dass das Löschen des Bildes durch großflächige Energiezufuhr mittels einer Bestrahlung der Druckfläche mit elektromagnetischer Strahlung, insbesondere im ultravioletten Spektralbereich, erfolgt.

Die elektromagnetische Strahlung zur Erzeugung eines Bildes kann im Bereich von 150 bis 1200 Nanometer Wellenlänge liegen. Insbesondere kann die Energiezufuhr im infraroten Spektralbereich erfolgen. Eine digitale Bebilderung kann durch einen Laser, bevorzugt mit ca. 1100 Nanometer Wellenlänge, erfolgen.

Das Bild kann in einer bevorzugten Ausführungsform durch großflächige Energiezufuhr zum Hydrophobieren mittels einer Bestrahlung der Druckfläche mit elektromagnetischer Strahlung gelöscht werden. Insbesondere kann die großflächige Bestrahlung im ultravioletten Spektralbereich erfolgen. Eine bevorzugte Lichtquelle ist ein Excimerstrahler, insbesondere ein (Xe₂)- Excimerstrahler.

Gemäß einer bevorzugten Ausführungsform zeichnet sich das Verfahren weiterhin dadurch aus, dass nach dem Löschen eines Bildes unter Einsatz von UV-Strahlung die Druckfläche mit wenigstens einer fluorierten Phosphonsäure behandelt wird.

Gemäß einer bevorzugten Ausführungsform zeichnet sich das Verfahren weiterhin dadurch aus, dass nach einem Bedrucken des Bedruckstoffes eine Reinigung der Druckfläche von Druckfarbe, insbesondere unter Verwendung eines konventionellen Farbreinigers, vorgenommen wird.

Die Reinigung der Druckfläche nach dem Bedrucken des Bedruckstoffes kann unter Verwendung eines konventionellen Farbreinigers oder eines konventionellen Waschmittels, einer tensidhaltigen wässrigen Lösung, beispielsweise dem unter dem Namen EUROSTAR vertriebenen Waschmittel, vorgenommen werden.

Die Erfindung stellt eine wiederverwendbare, insbesondere wiederbeschreibbare oder wiederbebilderbare, Druckform mit verlässlich reproduzierbarem Verhalten bezüglich des Bebilderungs- sowie Löschvorgangs zur Verfügung. Die Erzeugung eines Bildes oder einer Struktur auf der Druckfläche, ist einfach und verlässlich. Es ist nicht notwendig, dass sich eine Monolage der fluorierten Phosphorsäure auf der Metalloxidoberfläche selbstorganisierend aufbaut. Das Verfahren zur Bebilderung erfordert damit eine geringe Bereitstellungszeit der erfindungsgemäßen Druckform. Das Aufbringen von oben erwähnten Verbindungen innerhalb eines Zeitraums von wenigen Sekunden, reicht aus, um eine genügend starke Hydrophobierung oder Lipohobierung der Metalloxidoberflächen, insbesondere für einen Einsatz im einem Offset-Druckverfahren, zu erreichen. Insbesondere ermöglicht das erfindungsgemäße Verfahren die Hydrophobierung von rauen Metalloxidoberflächen, wie sie in gängigen industriellen Produktionsverfahren hergestellt werden.

Ein weiteres oder alternatives erfindungsgemäßes Verfahren zur Bebilderung einer wieder verwendbaren Druckform,
zeichnet sich aus durch:
- Präparieren einer weiderverwendbaren Druckform mit einer Druckfläche - wie oben mit Bezug zu einer erfindungsgemäßen Druckform beschrieben - wobei eine fluorierte Phosphonsäure auf die Oberflächen der Druckform aufgebracht wird;
- Erzeugen eines Bildes auf der Druckform durch selektive punktweise Energiezufuhr; und
- Löschen des Bildes nach einem Bedrucken eines Bedruckstoffes, insbesondere in einem Offset-Druckverfahren, durch großflächige Energiezufuhr.

Ein weiteres oder alternatives erfindungsgemäßes Verfahren zur Bebilderung einer wieder verwendbaren Druckform,
zeichnet sich aus durch:
- Synthetisieren einer fluorierten Phosphonsäure und Präparieren einer wieder verwendbaren Druckform mit einer Druckfläche - wie oben mit Bezug zu einer erfindungsgemäßen Druckform beschreiben - wobei die fluorierte Phosphonsäure auf die Oberfläche der Druckform aufgebracht wird;
- Erzeugen eines Bildes auf der Druckform durch selektive punktweise Energiezufuhr; und
- Löschen des Bildes nach einem Bedrucken eines Bedruckstoffes, insbesondere in einem Offset-Druckverfahren, durch großflächige Energiezufuhr.

Weitere Vorteile und vorteilhafte Ausführungsformen und Weiterbildungen der Erfindung werden anhand der nachfolgenden Figuren sowie deren Beschreibungen dargestellt. Es zeigt im Einzelnen:
- Figur 1: ein Ablaufdiagramm einer vorteilhaften Ausführungsform des erfindungsgemäßen Verfahrens zur Bebilderung einer erfindungsgemäßen wieder verwendbaren Druckform
- Figur 2: eine schematische Darstellung der Strukturierung einer erfindungsgemäßen wieder verwendbaren nassoffset-Druckform mittels des erfindungsgemäßen Verfahrens,
- Figur 3: eine schematische Darstellung der Strukturierung einer erfindungsgemäßen wieder verwendbaren Trockenoffset-Druckform mittels des erfindungsgemäßen Verfahrens, und

Ohne eine Einschränkung der Allgemeinheit hinsichtlich der amphiphilen organischen Verbindungen und hinsichtlich der Metalloxidoberflächen wird eine vorteilhafte Ausführungsform der erfindungsgemäßen wieder verwendbaren Druckform und eine vorteilhafte Ausführungsform eines erfindungsgemäßen Verfahren zur Bebilderung einer wieder verwendbaren Druckform anhand einer nativ oxidieren Titanoberfläche und anhand einer semi-perfluorierten Alkylphosphonsäure beispielhaft erläutert.

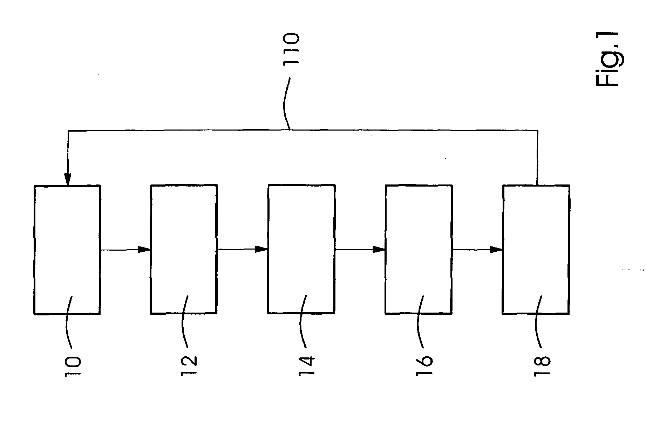

Die Figur 1 zeigt ein Ablaufdiagramm einer vorteilhaften Ausführungsform des erfindungsgemäßen Verfahrens zur Bebilderung einer erfindungsgemäßen wieder verwendbaren Druckform.

Um die zu behandelnde Titanoberfläche, beispielsweise in Form eines Bleches, zunächst zu reinigen und zu aktivieren/initialisieren, wird die Oberfläche in Verfahrenschritt 10 zunächst mit Licht im ultravioletten Wellenlängenbereich bestrahlt. Die Bestrahlung erfolgt bevorzugt etwa 10 Minuten unter Verwendung eines Xenon-Excimer-UV-Strahlers (z. B. des Strahlers "Xeradex" der Firma Radium) bei einer Wellenlänge von 172 Nanometer und mit einer Intensität von 45 Milliwatt pro Quadratzentimeter.

Im Zuge eines nur einmal durchzuführenden Erstpräparationsschritts können Metalloberflächen, z. B. Titanoberfläche, für den Nassoffset-Druck zunächst aufgeraut werden, wobei ein Rauheit (RMS bzw. root mean square) von etwa 350 Nanometer bevorzugt wird.

Für den Trockenoffset-Druck werden dagegen bevorzugt relativ glatte Metalloberflächen, z. B. Oberflächen von Titanblechen, eingesetzt, wobei eine Rauheit (RMS bzw. root mean square) von weniger als etwa 80 Nanometer bevorzugt wird. Werden stattdessen mit Titan bedampfte Polyimid-Folien eingesetzt, so wird bevorzugt eine Rauheit (RMS bzw. root mean square) von weniger als etwa 50 Nanometer gewählt.

Der Verfahrensschritt der Präparation 12 einer wiederverwendbaren Druckform umfasst das Aufbringen der semi-perfluorierten Alkylphosphonsäure auf die Oberfläche der Druckform. Die zuvor gereinigte und zugleich aktivierte/initialisierte Titanoberfläche wird dabei ohne wesentlichen Zeitverzug in eine Lösung getaucht, die die oben genannte chemische Verbindung in geeigneter Konzentration enthält. Bevorzugt wird die Titanoberfläche, in 1mM ethanolische Lösung aus semi-perfluorierten Alkylphosphonsäure für die Dauer von etwa 10 Sekunden getaucht. Das Tauchbad ist somit von geringer zeitlicher Dauer, so dass der Präparationsprozess in vorteilhafter Weise in kurzer Zeit durchführbar ist.

Es ist ferner möglich, anstelle des Tauchbades eine Sprühvorrichtung oder eine Aufwalzvorrichtung zum Aufbringen der Lösung auf die Oberfläche vorzusehen. Das Aufwalzen der Lösung führt in vorteilhafter Weise auch dazu, dass die Lösung oberflächennah durchmischt wird, wodurch die langsame, diffusionskontrollierte Bewegung der semi-perfluorierten Alkylphosphonsäure-Moleküle zur Titanoberfläche von einer schnelleren Mischbewegung überlagert wird.

Eine Reinigung der behandelten Titanoberfläche kann im Zuge des Verfahrensschritts 12 durch Spülen mit Ethanol bewirkt werden, welches die nicht anhaftenden Verbindungen entfernt. Die gereinigte Titanoberfläche kann anschließend mit einem wasserfreien, einem so genannten trockenen Prozessgas, beispielsweise Stickstoff, vollständig getrocknet werden.

Durch das Tauchbad wird die Oberfläche der Druckform hydrophob und lipophil für Nassoffset-Druckfarbe bzw. lipophob für Trocken-Offsetdruckfarbe.

Derartig präparierte oder bereitgestellte Titanoberflächen können mit Infrarot-Lichtquellen digital bebildert werden. Im Verfahrensschritt der Bebilderung 14 wird die Titanoberfläche beispielsweise mit einem Infrarot-Laser bei einer Wellenlänge zwischen etwa 810 und 1100 Nanometer bebildert. Als Lichtquelle wird in einer vorteilhaften Ausführungsform ein IR-Laser mit einer Leistung von etwa 1 bis 5 Watt bei einer Bebilderungsgeschwindigkeit der Oberfläche von etwa 1 bis 2 Meter pro Sekunde und einer Fluenz von etwa 30 bis 40 Joule pro Quadratzentimeter. Lokale, selektive, digitale Bebilderung kann mittels 30 Mikrometer großen Lichtflecken (spots, 1/e² Abfall) vorgenommen werden.

Eine funktionsfähige Druckform kann bei Einstrahlung von mehr als 15 Joule/Quadratzentimeter erhalten werden. Besonders gute Qualität wird ab 30 Joule/Quadratzentimeter erreicht.

Im Verfahrensschritt des Druckens 16 erfolgt die Vervielfältigung des Sujets auf einen Bedruckstoff nach einem Offset-Druckverfahren, beispielsweise auf einer Quickmaster-Druckmaschine der Firma Heidelberger Druckmaschinen AG. Optional kann nach dem Drucken die Titanoberfläche, durch Kontakt mit einer Lösung geeigneter Zusammensetzung von Druckfarbe gereinigt werden. In der vorteilhaften Ausführungsform wird Farbreiniger der Firma EURO STAR benutzt.

Im Verfahrensschritt des Löschens 18 wird die Titanoberfläche großflächig ultraviolettem Licht der Wellenlänge von etwa 172 Nanometern etwa für die Dauer von 5 Minuten ausgesetzt. Als Lichtquelle dient ein Xenon-Excimer- UV- Strahler (z. B. des Strahlers "Xeradex" der Firma Radium) mit einer optischen Leistung von 5 Watt bei elektrischer Leistung von 20 Watt.

Weiterhin kann die Oberfläche durch Einwirkung eines Atmosphärendruck-Plasma oder durch mechano-chemischen Abtrag einiger Nanometer der Oberfläche gelöscht werden.

Nun ist eine Wiederholung 110 der einzelnen Schritte, beginnend mit dem Schritt der Reinigung/des Aktivierens/Initialisierens 10 der wiederverwendbaren Druckform, möglich.

Der chemische Oberflächenzustand nach einer erfindungsgemäßen Präparation und Bebilderung der Titanoberfläche kann durch XP- und IR-spektroskopische Untersuchungen bestimmt werden. Dabei wird festgestellt, dass innerhalb der Laserbebilderten Bereiche der Oberfläche keine semi-perfluorierte Alkylphosphonsäure-Moleküle detektierbar sind.

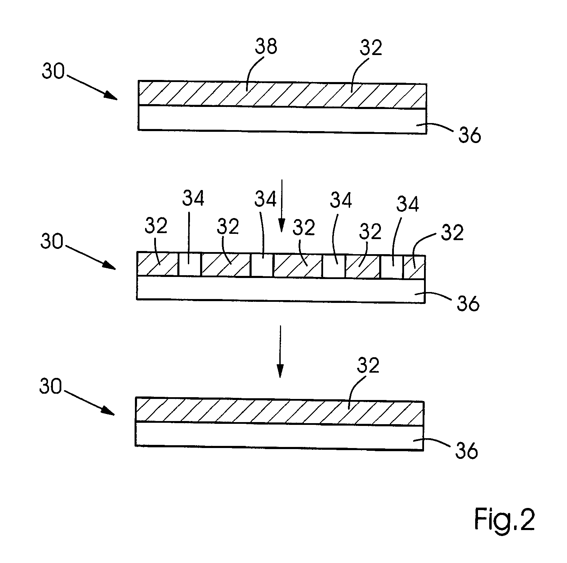

Die Figur 2 ist eine schematische Darstellung der Strukturierung einer erfindungsgemäßen wiederverwendbaren Nassoffset-Druckform 30 mittels des erfindungsgemäßen Verfahrens. Die wiederverwendbare Nassoffset-Druckform 30 weist eine Metalloberfläche 36 auf, welche mit wenigstens einer fluorierten Phosphonsäure in Form einer (Nano-)Schicht 38 behandelt ist.

Die Figur 2 zeigt drei Zustände der Druckform 30, deren zeitliche Ordnung durch die Pfeile angedeutet ist.

Zunächst liegt die Druckform 30 mit einer großflächig hydrophoben und lipophilen Druckfläche 32 bezüglich einer Nassoffset-Druckfarbe vor. Durch lokale, punktweise, selektive Bebilderung werden hydrophile Bereiche 34 auf der Oberfläche der Druckform 30 erzeugt bzw. freigelegt. Die Oberfläche weist damit eine Struktur aus hydrophoben Bereichen 32 und hydrophilen Bereichen 34 auf, so dass sie zum Drucken, insbesondere in einem Nassoffset-Druckverfahren verwendet werden kann.

Durch eine großflächige Bestrahlung der Oberfläche der Druckform 30 und Behandlung mit einer fluorierten Phosphonsäure wird erreicht, dass die Druckform 30 großflächig wieder eine hydrophobe und lipophile Druckfläche 32 bezüglich einer Nassoffset-Druckfarbe aufweist.

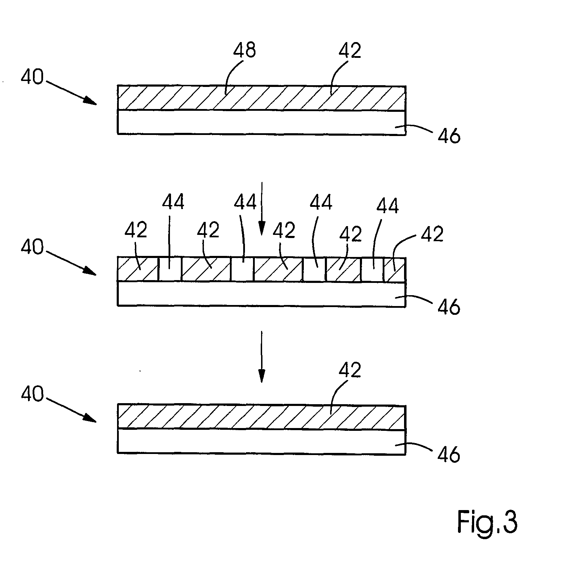

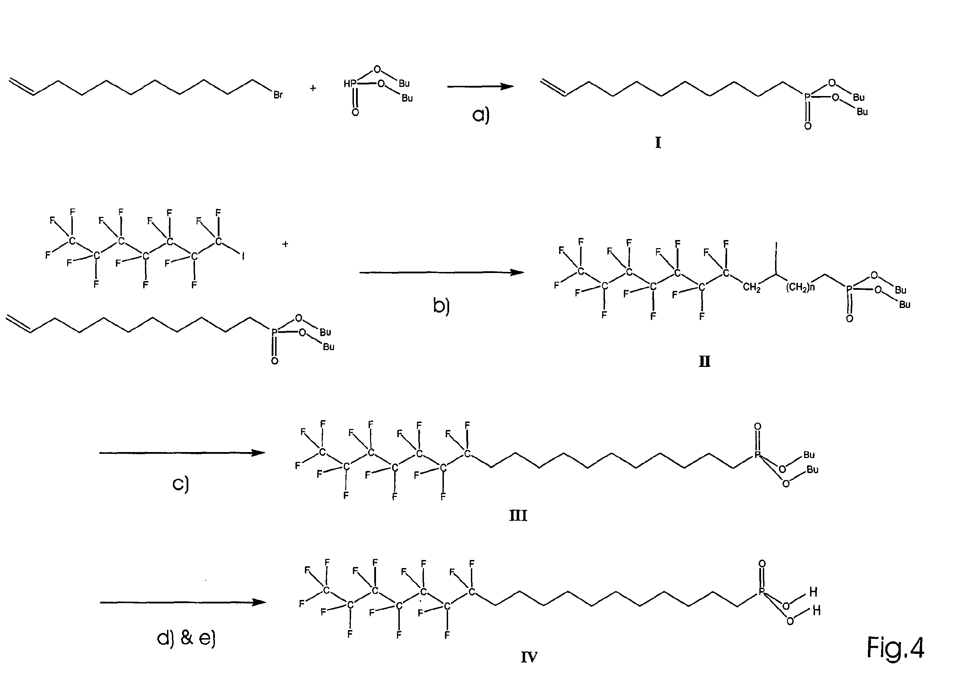

Die Figur 3 ist eine schematische Darstellung der Strukturierung einer erfindungsgemäßen wiederverwendbaren Trockenoffset-Druckform 40 mittels des erfindungsgemäßen Verfahrens. Die wiederverwendbare Trockenoffset-Druckform 40 weist eine Metalloberfläche 46 auf, welche mit wenigstens einer fluorierten Phosphonsäure in Form einer (Nano-) Schicht 48 behandelt ist.

Die Figur 3 zeigt drei Zustände der Druckform 40, deren zeitliche Ordnung durch die Pfeile angedeutet ist.

Zunächst liegt die Druckform 40 mit einer großflächig lipophoben Druckfläche 42 bezüglich einer Trockenoffset-Druckfarbe vor. Durch lokale, punktweise, selektive Bebilderung werden lipophile Bereich 44 auf der Oberfläche der Druckform 40 erzeugt bzw. freigelegt. Die Oberfläche weist damit eine Struktur aus lipophoben Bereichen 42 und lipohilen Bereichen 44 auf, so dass sie zum Drucken, insbesondere in einem Trockenoffset-Druckverfahren verwendet werden kann.

Durch eine großflächige Bestrahlung der Oberfläche der Druckform 40 und Behandlung mit einer fluorierten Phosphonsäure wird erreicht, dass die Druckform 40 großflächig wieder eine lipophobe Druckfläche 42 bezüglich einer Trockenoffset-Druckfarbe aufweist.

### Bezugszeichenliste

- 10: Verfahrensschritt der Reinigung/Aktivierung
- 12: Verfahrensschritt der Präparation/Bereitstellung
- 14: Verfahrensschritt der Bebilderung
- 16: Verfahrensschritt des Druckens
- 18: Verfahrensschritt des Löschens
- 110: Wiederholung der Verfahrensschritte
- 30: Druckform
- 32: Druckfläche
- 34: hydrophile Bereiche
- 36: Metalloberfläche
- 38: Schicht
- 40: Druckform
- 42: Druckfläche
- 44: lipophile Bereiche
- 46: Metalloberfläche
- 48: Schicht

## Patentansprüche

1. Wiederverwendbare Druckform, insbesondere für den Einsatz sowohl im Nassoffset-Druck als auch im Trockenoffset-Druck, mit einer Druckfläche (32, 42),
**dadurch gekennzeichnet,**
**dass** die Druckfläche (32, 42) eine mit wenigstens einer fluorierten Phosphonsäure hydrophobierte Metalloxidoberfläche (36, 46) aufweist, und dass die fluorierte Phosphonsäure eine fluorierte Alkylphosphonsäure, eine semi-perfluorierte Alkylphosphonsäure oder eine teil-aromatische Phosphonsäure ist.

2. Wiederverwendbare Druckform gemäß Anspruch 1,
**dadurch gekennzeichnet,**
**dass** die fluorierte Phosphonsäure eine semi-perfluorierte Stearinphosphonsäure ist.

3. Wiederverwendbare Druckform gemäß Anspruch 1,
**dadurch gekennzeichnet,**
**dass** die fluorierte Phosphonsäure eine Kohlenstoffkette, insbesondere eine einfach oder mehrfach verzweigte Kohlenstoffkette, aufweist, wobei die Anzahl der Kohlenstoffatome größer oder gleich 8 und kleiner oder gleich 30 ist.

4. Wiederverwendbare Druckform gemäß Anspruch 1,
**dadurch gekennzeichnet,**
**dass** die Metalloxidoberfläche (36, 46) eine Oberfläche aus der Menge der folgenden Oberflächen ist: Nativ oxidierte Titanoberfläche, nativ oxidierte Edelstahloberfläche, nativ oxidierte Aluminiumoberfläche, Titanat und Zirkonat.

5. Wiederverwendbare Druckform gemäß Anspruch 1,
**dadurch gekennzeichnet,**
**dass** die behandelte Druckfläche (32, 42) durch die fluorierte Phosphonsäure hydrophobiert und lipophil für Nassoffset-Druckfarbe ist oder lipophob für Trockenoffset-Druckfarbe ist.

6. Wiederverwendbare Druckform gemäß Anspruch 1,
**dadurch gekennzeichnet,**
**dass** die Druckform (30, 40) als Oberfläche eines Vollzylinders, als Oberfläche eines Hohlzylinders, als eine Hülse, als eine Platte oder als eine Folie ausgebildet ist.

7. Druckwerk,
**gekennzeichnet durch**
wenigstens eine wiederverwendbare Druckform (30, 40) gemäß einem der vorstehenden Ansprüche.

8. Druckmaschine,
**gekennzeichnet durch**
wenigstens ein Druckwerk gemäß Anspruch 7.

9. Verfahren zur Bebilderung einer wiederverwendbaren Druckform,
**gekennzeichnet durch,**
- Präparieren (12) einer wiederverwendbaren Druckform (30, 40) mit einer Druckfläche (32, 42) gemäß einem der vorstehenden Ansprüche 1 bis 8, wobei das Präparieren das Benetzen der Druckfläche (32, 42) mit einer Lösung, welche eine fluorierte Alkylphosphonsäure, eine semi-perfluorierte Alkylphosphonsäure oder eine teil-aromatische Phosphonsäure enthält, umfasst;
- Erzeugen (14) eines Bildes auf der Druckform (30, 40) **durch** selektive punktweise Energiezufuhr; und
- Löschen (18) des Bildes nach einem Bedrucken eines Bedruckstoffes, insbesondere in einem Offsetdruckverfahren, **durch** großflächige Energiezufuhr.

10. Verfahren gemäß Anspruch 9,
**dadurch gekennzeichnet,**
**dass** das Präparieren der wiederverwendbaren Druckform (30, 40) das Benetzen der Druckfläche (32, 42) mit einer Lösung, welche wenigstens eine semi-perfluorierte Stearinphosphonsäure enthält, umfasst.

11. Verfahren gemäß Anspruch 9,
**dadurch gekennzeichnet,**
**dass** das Verfahren ferner die folgenden Schritte umfasst:
- Reinigen (10) der Druckfläche (32, 42) und Bestrahlung der Metalloxidoberfläche (36, 46) mit einer UV-Lichtquelle;
- Entfernen (10) nicht anhaftender Verbindungen von der behandelten Metalloxidoberfläche (36, 46); und
- Trocknen (10) der Metalloxidoberfläche (36, 46) mit einem wasserfreien Prozessgas, insbesondere mit Stickstoff.

12. Verfahren gemäß Anspruch 9,
**dadurch gekennzeichnet,**
**dass** das Präparieren (12) der wiederverwendbaren Druckform (30, 40) die folgenden Schritte zur Präparation einer nativ oxidierten Titanoberfläche (36, 46) umfasst:
- Ätzen der nativ oxidierten Titanoberfläche (36, 36); und
- Erzeugen eines definierten Oxidfilms, insbesondere einer hydrophilen Oberfläche oder einer lipophilen Oberfläche für Trockenoffset-Druckfarbe.

13. Verfahren gemäß Anspruch 9,
**dadurch gekennzeichnet,**
**dass** die Erzeugung eines Bildes (14) auf der Druckfläche (32, 42) durch selektive punktweise Energiezufuhr mit Hilfe von elektromagnetischer Strahlung, insbesondere im infraroten Spektralbereich erfolgt, und dass das Löschen des Bildes (18) durch großflächige Energiezufuhr mittels einer Bestrahlung der Druckfläche (32, 42) mit elektromagnetischer Strahlung, insbesondere im ultravioletten Spektralbereich, erfolgt.

14. Verfahren gemäß Anspruch 9,
**dadurch gekennzeichnet,**
**dass** nach Erzeugen eines Bildes (12) auf der Druckfläche (32, 42) die Druckfläche (32, 42) mit wenigstens einer fluorierten Phosphonsäure behandelt wird.

15. Verfahren gemäß Anspruch 9,
**dadurch gekennzeichnet,**
**dass** nach einem Bedrucken (16) des Bedruckstoffes eine Reinigung der Druckfläche (32, 42) von Druckfarbe, insbesondere unter Verwendung eines konventionellen Farbreinigers, vorgenommen wird.

## Claims

1. Reusable printing form, in particular for use both in wet offset printing and in dry offset printing, comprising a printing area (32, 42),
**characterized in**
**that** the printing area (32, 42) includes a metal oxide surface (36, 46) made hydrophobic with at least one fluorinated phosphonic acid, and that the fluorinated phosphonic acid is a fluorinated alkylphosphonic acid, a semiperfluorinated alkylphosphonic acid, or a partly aromatic phosphonic acid.

2. Reusable printing form according to Claim 1,
**characterized in**
**that** the fluorinated phosphonic acid is a semiperfluorinated octadecylphosphonic acid.

3. Reusable printing form according to Claim 1,
**characterized in**
**that** the fluorinated phosphonic acid includes a carbon chain, in particular a singly or multiply branched carbon chain, the number of carbon atoms being greater than or equal to 8 and less than or equal to 30.

4. Reusable printing form according to Claim 1,
**characterized in**
**that** the metal oxide surface (36, 46) is one of the following surfaces: naturally oxidized titanium surface, naturally oxidized stainless steel surface, naturally oxidized aluminium surface, titanate, and zirconate.

5. Reusable printing form according to Claim 1,
**characterized in**
**that** the treated printing area (32, 42) is rendered hydrophobic and lipophilic by the phosphonic acid for wet offset printing ink or lipophobic for dry offset printing ink.

6. Reusable printing form according to Claim 1,
**characterized in**
**that** the printing form (30, 40) is designed as the surface of a solid cylinder, as the surface of a hollow cylinder, as a sleeve, as a plate, or as a foil.

7. Printing unit,
**characterized by**
at least one reusable printing form (30, 40) according to one of the preceding claims.

8. Printing press,
**characterized by**
at least one printing unit according to Claim 7.

9. Method of imaging a reusable printing form,
**characterized by**
- preparing (12) a reusable printing form (30, 40) with a printing area (32, 42) according to one of the preceding claims 1 to 8, the preparation including the wetting of the printing area (32, 42) with a solution containing a fluorinated alkylphosphonic acid, a semi-perfluorinated alkylphosphonic acid, or a partly aromatic phosphonic acid;
- producing (14) an image on the printing form (30, 40) by selective point-by-point supply of energy; and
- erasing (18) the image after printing on a print medium, in particular in an offset printing process, by a supply of energy over a large area.

10. Method according to Claim 9,
**characterized in**
**that** the preparation of the reusable printing form (30, 40) comprises the wetting of the printing area (32, 42) with a solution that contains at least one semiperfluorinated octadecylphosphonic acid.

11. Method according to Claim 9,
**characterized in**
**that** the method further includes the following steps:
- cleaning (10) the printing area (32, 42) and irradiating the metal oxide surface (36, 46) with an UV light source;
- removing (10) non-adhering compounds from the treated metal oxide surface (36, 46); and
- drying (10) the metal oxide surface (36, 46) with a waterless process gas, in particular nitrogen.

12. Method according to Claim 9,
**characterized in**
**that** the preparation (12) of the reusable printing form (30, 40) comprises the following steps for preparing a naturally oxidized titanium surface (36, 46):
- etching of the naturally oxidized titanium surface (36, 46); and
- producing a defined oxide film, in particular a hydrophilic surface or a lipophilic surface for dry offset printing ink.

13. Method according to Claim 9,
**characterized in**
**that** the production of an image (14) on the printing area (32, 42) is carried out by selective point-by-point supply of energy with the aid of electromagnetic radiation, in particular in the infrared spectral range, and that the erasing of the image (18) is carried out by a supply of energy over a large area by means of irradiation of the printing area (32, 42) with electromagnetic radiation, in particular in the ultraviolet spectral range.

14. Method according to Claim 9,
**characterized in**
**that** after production of an image (12) on the printing area (32, 42) the printing area (32, 42) is treated with at least one fluorinated phosphonic acid.

15. Method according to Claim 9,
**characterized in**
**that** after printing (16) on the print medium, the printing area (32, 42) is cleaned to remove printing ink, in particular using a conventional ink cleaner.

## Revendications

1. Forme d'impression réutilisable, en particulier pour l'utilisation aussi bien dans l'impression offset humide que dans l'impression offset à sec, comprenant une surface d'impression (32, 42), **caractérisée en ce que** la surface d'impression (32, 42) présente une surface d'oxyde métallique (36, 46) imperméabilisée avec au moins un acide phosphonique fluoré, et **en ce que** l'acide phosphonique fluoré est un acide alkylphosphonique fluoré, un acide alkylphosphonique semi-perfluoré ou un acide phosphonique partiellement aromatique.

2. Forme d'impression réutilisable selon la revendication 1, **caractérisée en ce que** l'acide phosphonique fluoré est un acide phosphonique stéarique semi-perfluoré.

3. Forme d'impression réutilisable selon la revendication 1, **caractérisée en ce que** l'acide phosphonique fluoré présente une chaîne des carbones, en particulier une chaîne des carbones simple ou ramifiée plusieurs fois, où le nombre d'atomes de carbone est supérieur ou égal à 8 et inférieur ou égal à 30.

4. Forme d'impression réutilisable selon la revendication 1, **caractérisée en ce que** la surface d'oxyde métallique (36, 46) est une surface utilisée parmi la quantité des surfaces suivantes : surface de titane oxydée de façon naturelle, surface d'acier spécial oxydée de façon naturelle, surface d'aluminium oxydée de façon naturelle, titanate et zirconate.

5. Forme d'impression réutilisable selon la revendication 1, **caractérisée en ce que** la surface d'impression traitée (32, 42) est imperméabilisée par l'acide phosphonique fluoré et lipophile pour la couleur d'impression offset à l'humide ou bien lipophobe pour la couleur d'impression offset à sec.

6. Forme d'impression réutilisable selon la revendication 1, **caractérisée en ce que** la forme d'impression (30, 40) est conçue comme une surface d'un cylindre plein, comme une surface d'un cylindre creux, comme un mandrin, comme une plaque ou comme une feuille.

7. Groupe d'impression **caractérisé par** au moins une forme d'impression réutilisable (30, 40) conformément à l'une quelconque des revendications précédentes.

8. Machine à imprimer **caractérisée par** au moins un groupe d'impression selon la revendication 7.

9. Procédé pour l'illustration sous forme d'image d'une forme d'impression réutilisable, **caractérisée par** les étapes consistant :
■ à préparer (12) une forme d'impression réutilisable (30, 40) comprenant une surface d'impression (32, 42), conformément à l'une quelconque des revendications précédentes 1 à 8, où la préparation comprend le mouillage de la surface d'impression (32, 42), avec une solution qui contient un acide alkylphosphonique fluoré, un acide alkylphosphonique semi-perfluoré ou bien un acide phosphonique partiellement aromatique;
■ à produire (14) une image sur la forme d'impression (30, 40) par une alimentation en énergie ponctuelle et sélective ; et
■ à effacer (18) l'image après l'impression d'un support d'impression, en particulier dans un procédé d'impression offset, par une alimentation en énergie sur une grande surface.

10. Procédé selon la revendication 9, **caractérisé en ce que** la préparation de la forme d'impression réutilisable (30, 40) comprend le mouillage de la surface d'impression (32, 42) avec une solution qui contient au moins un acide phosphonique stéarique semi-perfluoré.

11. Procédé selon la revendication 9, **caractérisé en ce que** le procédé comprend en outre les étapes suivantes :
■ le nettoyage (10) de la surface d'impression (32, 42) et l'irradiation de la surface d'oxyde métallique (36, 46) avec une source de lumière ultraviolette ;
■ l'élimination (10) de composés non adhérents, par rapport à la surface d'oxyde métallique traitée (36, 46) ; et
■ le séchage (10) de la surface d'oxyde métallique (36, 46) avec un gaz de procédé anhydre, en particulier avec de l'azote.

12. Procédé selon la revendication 9, **caractérisé en ce que** la préparation (12) de la forme d'impression réutilisable (30, 40) comprend les étapes suivantes pour la préparation d'une surface de titane (36, 46) oxydée de façon naturelle :
■ le décapage de la surface de titane (36, 46) oxydée de façon naturelle ; et
■ la production d'un film d'oxyde défini, en particulier d'une surface hydrophile ou d'une surface lipophile pour de la couleur d'impression offset à sec.

13. Procédé selon la revendication 9, **caractérisé en ce que** la production d'une image (14) sur la surface d'impression (32, 42) est réalisée par une alimentation en énergie ponctuelle et sélective, à l'aide d'un rayonnement électromagnétique, en particulier dans le domaine spectral infrarouge, et **en ce que** l'effacement de l'image (18) est réalisé par une alimentation en énergie sur une grande surface, au moyen d'une irradiation de la surface d'impression (32, 42) par un rayonnement électromagnétique, en particulier dans le domaine spectral ultraviolet.

14. Procédé selon la revendication 9, **caractérisé en ce que**, après la production d'une image (14) sur la surface d'impression (32, 42), la surface d'impression (32, 42) est traitée avec au moins un acide phosphonique fluoré.

15. Procédé selon la revendication 9, **caractérisé en ce que**, après l'impression (16) du support d'impression, on procède à un nettoyage de la surface d'impression (32, 42) en enlevant la couleur d'impression, en particulier par l'utilisation d'un produit nettoyant, de type classique, pour les couleurs.
